# EUROPEAN PATENT APPLICATION

(11) **EP 2 383 506 A1**
(43) Date of publication of application: **02.11.2011**
(21) Application number: 10161432.9
(22) Date of filing: 29.04.2010
(51) Int. Cl.: F16M 13/02, F16M 11/10

(54) **Mounting arrangement for a screen**

(71) Applicant: BANG & OLUFSEN A/S, 7600 Struer (DK)
(72) Inventor: Nielsen, Kaj, 7790 Thyholm (DK)
(74) Representative: Tellefsen, Jens J.

(57) **Abstract**

Mounting arrangement for a screen (1), in particular a flat TV screen, PC screen or the like, where said mounting arrangement comprises two rails (7,8), each rail having a surface suitable to be mounted on a wall or other surface, where a scissors arrangement (6) comprising two arms (10,11) is slidably fastened to each of said two rails (7,8), and where carrying members (2,3) are arranged at the opposite ends of each scissors arrangement (6), where at least one arm (10,11) of each scissors arrangement (6) is slidably fastened to said carrying members (2,3), and where said carrying members (2,3) are arranged at a distance accommodating the screen (1) between said carrying members (2,3), where interface means are provided for attaching said screen to said carrying members. Furthermore means are provided for tilting the screen about a horizontal axis (in use).

## Description

### Field of the Invention

The present invention relates to a mounting arrangement for a screen, in particular a flat TV screen, PC screen or the like.

### Background of the Invention

In the art a number of devices have been presented in order to mount a screen in a particular position or where the mounting means comprise means for changing the position of the screen after it has been mounted.

Furthermore, as especially television screens increase in size, where typical sizes at present for larger screens range between 40 to 105 inches in cross-measurement, the screen as such becomes increasingly dominating in the interior design. As most screens when turned off are usually black or grey they are not always aesthetic pleasing and often does not fit in the interior decoration scheme, but are tolerated due to their function as television.

### Object of the Invention

It is therefore an object of the present invention to alleviate the problems with the prior art.

### Description of the Invention

The present invention addresses this by providing a mounting arrangement for a screen, in particular a flat TV screen, PC screen or the like, where said mounting arrangement comprises two rails, each rail having a surface suitable to be mounted on a wall or other surface, where a scissors arrangement comprising two arms is slidably fastened to each of said two rails, and where carrying members are arranged at the opposite ends of each scissors arrangement, where at least one arm of each scissors arrangement is slidably fastened to said carrying members, and where said carrying members are arranged at a distance accommodating the screen between said carrying members, where interface means are provided for attaching said screen to said carrying members.

With this mounting arrangement it is achieved that the screen may be mounted very close to the wall and by activating the scissors the screen may be moved out from the wall into a more prominent position in the room.

In the following reference will be made to a television screen and in particular to a television screen of the flat TV type where typically the thickness of the entire screen is from approximately 2-8 centimetres. Typically, the screen sizes will be between 30 and 105 inches such that even though the television is relatively thin, it is a substantial weight that needs to be carried by the mounting arrangement. By providing a scissors arrangement a very controlled and stable movement is facilitated and at the same time the screen may be placed in a position at a substantial distance from the rails which are fastened to the wall.

In a further advantageous embodiment said interface means comprises means for rotating the screen, in use about a horizontal axis.

Naturally the interface means will carry the cabling necessary in order to transfer the signals controlling the screen. By furthermore providing the interface means with means for rotating the screen a very important and novel feature is provided to the mounting arrangement.

When rotating the screen about a horizontal axis it is possible to rotate the screen at least 180° whereby the rearside of the screen may become visible. With this configuration it is possible to store the television having the rear side of the screen facing the room such that any decoration put onto the rearside of the screen will be visible for example when the screen is not in use. When desiring to use the screen it is then possible to activate the scissors arrangement displacing the screen relative to the wall such that as the displacement is far enough from the wall, the means for rotating the screen are activated whereby the screen may rotate 180° thereby exposing the display side of the screen. In this position naturally the screen may be maintained in its position away from the wall or the scissor arrangement may be activated again in order to move the screen back towards the wall.

With this arrangement it is possible to "hide" the big black expanse of the screen when not in use in that on the backside of the screen any poster, painting or decoration as such may be placed which, due do the rotating means may be the visible part of the screen when not in use. When desiring to use the screen, the screen is flipped in the manner described above.

In a further advantageous embodiment loudspeakers and/or a subwoofer are mounted in the carrying members. As the carrying members must have a certain dimension in order to be able to transfer the forces to which they are exposed, this may also leave room for the placement of loudspeakers. Especially with modem loudspeakers and optimized design of the cabinets of the loudspeakers and sufficient computer control it is possible to provide sound reproduction equipment which has a very high quality integrated in the carrying members without these members becoming especially bulky or prominent.

In a still further advantageous embodiment a subwoofer is arranged in the screen, preferably along the upper and/or lower edge of the screen.

In the position of the screen where the rear side is facing the room and the mounting means including the screen is used as a sound reproduction unit only, a superior acoustic reproduction may be achieved by using the loudspeakers and the carrying members and tilting the screen slightly due to the activation of the rotating means whereby the subwoofer mounted in an edge of the screen will be able to direct the sound at an oblique angle into the wall reflecting off the wall and thereby distributing the lower frequencies in a manner suitable for a subwoofer. Although the installation is relatively flat, i.e. the carrying members and the screen due to the scissors arrangement are arranged very close to the wall, the slight tilting of the screen allowing the subwoofer to reflect its emissions off the wall provides for very good sound distribution and thereby a very good sound quality. Naturally, the subwoofer may also be used in the position of the screen where the screen is facing a viewer.

In a still further advantageous embodiment a spindle is arranged in each of said two rails, where said spindle is rotatable about an axis parallel to the longitudinal direction of said rail, where the spindle engages one end of at least one of the arms, such that by rotating the spindle the ends of the arms are brought closer or further from each other depending on the direction of rotation of the spindle.

The spindle provides a very reliable means of mechanically engaging the scissors arrangement in order to change the distance between the ends of the scissors whereby the distance of the screen from the rails and thereby the wall may be changed. Therefore by activating the spindles, i.e. rotating them in one direction or the other, the screen may be moved further away from the wall or closer towards the wall. The spindle axis is arranged parallel to the rails in order to engage the ends of the arms making up the scissors.

In a still further advantageous embodiment of the invention a linear actuator is arranged in each of said two rails, where said actuator is extendable respectively retractable along an axis parallel to the longitudinal direction of said rail, where the actuator engages one end of at least one of the arms, such that by extending/retracting the actuator, the ends of the arms are brought closer or further from each other depending on the direction of movement of the actuator.

The linear actuator provides the same movement with respect to the ends of the arms of the scissors arrangement as the spindle mentioned above, but by using actuators it is possible to design the rails slightly differently depending on the circumstances.

In a still further advantageous embodiment of the invention means are provided for allowing the scissors to rotate about an axis parallel to the longitudinal direction of the rails.

By providing a hinge mechanism such that the scissors may turn around an axis parallel to the rails it is possible to tilt the screen in the screen's vertical position such that if viewing is desired from an angle not directly in front of the screen the screen may be rotated about a vertical axis in order to adjust the viewing angle to be most optimal with respect to a viewer.

By providing control means for the scissors which control the movement of the screen relative to the rails, it is possible to activate/control the scissors independently, whereby the angle of the screen relative to for example a wall on which the mounting arrangement is fastened may be adjusted.

In a still further advantageous embodiment the spindle or actuator and the means for rotating the screen are electrically driven, and their activation is controlled by a control box, where said control box comprises means for receiving wireless signals operating the various means and the screen itself.

As electrical power must be supplied to the screen it is natural that the means for operating the various movements of the screen are also supplied by electrical power. Furthermore, the distribution of power to the different means in the mounting arrangement are controlled by a control box which is also provided with means such that it may receive wireless signals, for example from a remote control and preferably the same remote control which is used to control and operate the screen such that a user from a remote location may be able to manipulate the screen into the most optimum position with respect to that particular position.

In a still further advantageous embodiment of the invention the control box furthermore comprises programmable means whereby a particular input signal activates a routine whereby the scissors or actuator is activated bringing the ends of the arms closer together, whereby the screen is forced away from the rails, and at a certain distance from the rails the screen is rotated such that the side of the screen facing the rails is rotated whereby the screen faces away from the rails, and thereafter the ends of the arms of the scissors are forced apart, thereby retracting the screen towards the rails.

As already explained above, it is possible to store the screen in a position where the display of the screen is facing the wall and the rear side, for example provided with a poster or painting , is facing the viewer's position. Therefore, by providing a feature, i.e. a pre-programmed routine such that by activation of the display, for example by turning on the television from the remote control the control box will carry out a sequence of activations in order to first displace the screen relative to the wall. The rotating means will then flip the television 180° such that the display will be facing a viewer and the scissors will then retract the screen towards the wall again leaving the entire setup with the display facing a viewer. Naturally, after having reached this position the other means for tilting the screen either about a horizontal axis and/or a vertical axis may be manipulated either in a pre-programmed mode or manually by user-operating the remote control in order to position the screen and the most optimum viewing/listening position.

Means for indicating the status of the mounting arrangement and/or screen may be arranged on any exterior surface of either the mounting arrangement or the screen itself. In this connection it may be advantageous to arrange the status indicators, often LED's on the carrying members as these will always be facing away from a wall on which the screen is mounted. The status indicators may indicate one or more of the following conditions: screen on/off, mounting arrangement actuators on/off, mounting arrangement in storage position (distance between rail and carrying member as small as possible), connection to source (audio, video etc), reception of wireless signal, screen tilted on/off, mute, etc.

Various advantageous embodiments of the invention have been explained above and below a detailed embodiment of the invention will be explained with reference to the accompanying drawing wherein:
Figure 1 illustrates a schematic perspective view of the invention
Figure 2 illustrates a side-view of the invention
Figure 3 illustrates a movement of the invention

### Description of the Drawing

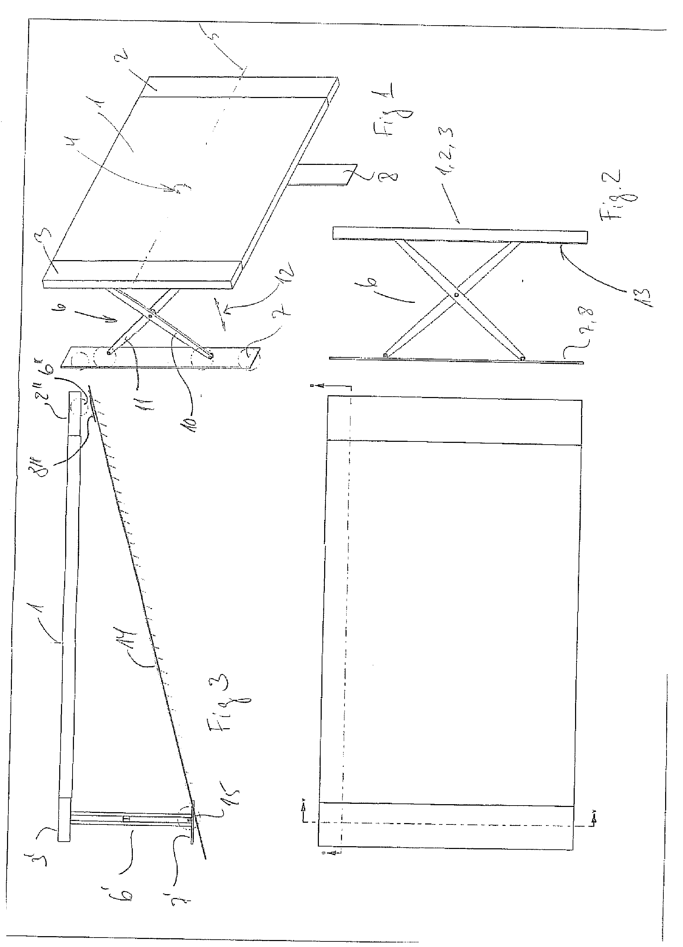

In figure 1 is illustrated a schematic perspective view of the invention.

The screen 1 is arranged between two carrying members 2, 3 where interface means (not illustrated) between the screen 1 and the carrying members 2, 3 allows the screen to rotate as indicated by the arrow 4 about the axis 5.

In order to provide enough space for the screen I to rotate, scissors arrangements 6 are arranged between the carrying member 2, 3 and rails 7, 8 which rails will typically be fastened to a wall. By displacing the ends of the arms 10, 11 relative to each other vertically the distance between the rail 7, 8 and the carrying members 2, 3 will be increased respectively decreased such that the effect will be that the screen 1 moves further away from or closer to the wall on which the rails 7, 8 are mounted.

The relative movement of the arms 10, 11 may be controlled by activating a spindle where the spindle is connected to the ends of the arms 10, 11 such that rotation of the spindle will move the ends of the arms either towards each other or apart whereby the distance indicated by the arrow 12 between the rails 7, 8 and the carrying members 2, 3 will either increase or decrease. As an alternative to a spindle a linear actuator may be used or any other suitable means which will be able to displace one or both ends of the arms 10, 11 along the rails 7, 8 in a controlled manner.

In figure 2 a side-view of the invention is illustrated.

As the distance 12 is sufficient, i.e. corresponds to at least half the height of the screen 1, there will be enough room between the rails 7, 8 and the carrying members 2, 3 such that the screen may be rotated as indicated by the arrow 4.

As the front of the screen, when not in use is usually a substantially dark grey or even black rectangle, a user might find that such a dark rectangle does not fit with the interior decoration. By being able to use the rear-side 13 of the screen as the "front side" when the screen is not in use, it is possible to apply a more decorative poster or painting or similar to the rear side, such that when the screen is not in use the dark rectangle will be turned away from view and a more decorative rectangle will take its place. This is even more interesting when the screen is a television set which is integrated into an audio installation where the carrying members 2, 3 comprises loudspeakers and a subwoofer is integrated in the screen construction. As the sound system will draw some attention it is desirable that the sound system as such is as aesthetically pleasing as possible, and this is possible by providing the screen's rear side with any desirable look. Furthermore, the possibility of activating the interface means such that the screen may tilt slightly when used as a subwoofer provides the possibility of bouncing the sound off the wall and thereby utilizing the subwoofer optimally together with the loudspeakers which will typically be integrated in the carrying members 2, 3. In this manner a complete integrated system is provided.

In figure 3 is illustrated an embodiment of the invention where only one of the scissors arrangements 6' has been activated such that the distance between the rail 7' and carrying member 3' is displaced a certain distance from a wall 14, whereas the other scissors 6" are retracted such that the carrying member 2" is as close to the rail 8" as possible.

The screen 1 is thereby arranged at an oblique angle to the wall 14 such that listening or viewing may be optimized by rotating the screen into a more desirable orientation with respect to the viewer/listener. This facility is provided by arranging means between the rail 7', 8' and the scissors arrangement 6', 6" such that the scissors 6', 6" may rotate about a vertical axis 15 thereby allowing the movement illustrated in figure 3.

For the sake of clarity wires, fastening means and other equipment have not been illustrated. As already explained above it is foreseen that the inventive mounting arrangement may be utilized in connection with pre-programmed routines stored in a control box such that a user for example by means of a remote control may activate the various functions, i.e. movement of the scissors arms 10, 11 in order to bring the screen into a desired position or coordinated movements of the scissors arms in order to move the screen away from the rails 7, 8 in order to flip the screen as illustrated by the arrow 4. All these movements may also be integrated into pre-programmed routines such that for example when a user desires to watch a movie or a TV-programme on the screen and the screen in its stored position is with its rear-side facing the room for decorative purposes the user's pressing of the "on"-button will cause the scissors to move whereby the ends of the arms 10, 11 of the scissors 6 will be brought linearly along the rails 7, 8 whereby the screen will be displaced from the rails 7.8 in order to be able to flip the screen into the viewing position.

The scissors arrangement will be provided with a covering, preferably a flexible covering such that it will be very difficult to be caught and squeezed in the scissors arrangement during its movement.

## Claims

1. Mounting arrangement for a screen, in particular a flat TV screen, PC screen or the like, where said mounting arrangement comprises two rails, each rail having a surface suitable to be mounted on a wall or other surface, where a scissors arrangement comprising two arms is slidably fastened to each of said two rails, and where carrying members are arranged at the opposite ends of each scissors arrangement, where at least one arm of each scissors arrangement is slidably fastened to said carrying members, and where said carrying members are arranged at a distance accommodating the screen between said carrying members, where interface means are provided for attaching said screen to said carrying members.

2. Mounting arrangement according to claim 1 **characterised in that** said interface means comprises means for rotating the screen, in use about a horizontal axis.

3. Mounting means according to claim 1 or 2 **characterised in that** loudspeakers and/or a sub-woofer are mounted in the carrying members

4. Mounting means according to claim 3 **characterised in that** a sub-woofer is arranged in the screen, preferably along the upper or lower edge of the screen.

5. Mounting means according to claim 1 or 2 **characterised in that** a spindle is arranged in each of said two rails, where said spindle is rotatable about an axis parallel to the longitudinal direction of said rail, where the spindle engages one end of at least one of the arms, such that by rotating the spindle the ends of the arms are brought closer or further from each other depending on the direction of rotation of the spindle.

6. Mounting means according to claim 1 or 2 **characterised in that** a linear actuator is arranged in each of said two rails, where said actuator is extendable respectively retractable along an axis parallel to the longitudinal direction of said rail, where the actuator engages one end of at least one of the arms, such that by extending/retracting the actuator, the ends of the arms are brought closer or further from each other depending on the direction of movement of the actuator.

7. Mounting means according to claim 1 or 2 **characterised in that** means are provided for allowing the scissors to rotate about an axis parallel to the longitudinal direction of the rails.

8. Mounting means according to any preceding claim **characterised in that** the spindle or actuator, and the means for rotating the screen are electrically driven, and their activation is controlled by a control box, where said control box comprises means for receiving wireless signals operating the various means and the screen itself.

9. Mounting means according to claim 7, **characterised in that** the control box furthermore comprises programmable means, whereby a particular input signal activates a routine whereby the scissors or actuator is activated bringing the ends of the arms closer together, whereby the screen is forced away from the rails, and at a certain distance from the rails the screen is rotated such that the side of the screen facing the rails is rotated whereby the screen faces away from the rails, and thereafter the ends of the arms of the scissors are forced apart, thereby retracting the screen towards the rails.
